# EUROPÄISCHE PATENTANMELDUNG

(11) **EP 3 670 179 A1**
(43) Veröffentlichungstag der Anmeldung: **24.06.2020**
(21) Anmeldenummer: 19172537.3
(22) Anmeldetag: 03.05.2019
(51) Int. Cl.: B32B 17/10, G07F 17/32, H05K 5/02

(54) **PANZERGLAS FÜR AUTOMATENDISPLAYS**

(30) Priorität: 17.12.2018 DE 202018107197 U
(71) Anmelder: Inci, Ferdi, 12349 Berlin (DE)
(72) Erfinder: Inci, Ferdi, 12349 Berlin (DE)
(74) Vertreter: Hertin und Partner Rechts- und Patentanwälte PartG mbB

(57) **Zusammenfassung**

Die Erfindung betrifft eine Schutzschicht für ein Display, die bei unterschiedlichsten Automaten, vor allem solchen mit Touchscreen, verwendet werden kann.

## Beschreibung

### Zusammenfassung

Die Erfindung betrifft eine Schutzschicht für ein Display, die bei unterschiedlichsten Automaten, vor allem solchen mit Touchscreen, verwendet werden kann.

### Stand der Technik

Panzerglas oder Schutzfolien sind im Stand der Technik vor allem für Smartphones oder Tablets bekannt. Solche Schutzfolien sollen verhindern, dass ein Display beim Herunterfallen zerbricht. Es gibt solche Schutzfolien aus unterschiedlichen Materialien, wobei entweder rein Kunststofffolien oder solche mit zusätzlichen Glasschichten verwendet werden. Reine Kunststofffolien zeichnen sich durch eine besondere Flexibilität aus und sind zudem leicht zu positionieren. Schutzschichten mit Glasanteil sind nicht ganz so flexibel aber dafür deutlich robuster.

Für Automaten und vor allem Spielautomaten gibt es solche Schutzschichten im Stand der Technik bisher nicht. Ein gängiges Problem bei Spielautomaten ist aber die Zerstörung des Displays durch Einwirkung von Gewalt, z.B. aufgrund von Frustration beim Spielen. Dies verursacht zum einen nicht unerheblichen finanziellen Schaden, einen Ausfall des Geräts bis zur Reparatur und birgt darüber hinaus aber auch ein Verletzungsrisiko für den Nutzer.

Es war daher die Aufgabe der Erfindung eine Schutzfolie bereitzustellen, die an Automaten und speziell Spielautomaten angebracht werden kann und die Displays vor Schäden durch Gewalteinwirkung schützt.

### Beschreibung der Erfindung

Das der Erfindung zu Grunde liegende Problem wird durch die unabhängigen Ansprüche gelöst. Bevorzugte Ausführungsformen befinden sich in den abhängigen Ansprüchen.

Die Erfindung betrifft in einer ersten bevorzugten Ausführungsform eine Schutzschicht zum Aufbringen auf ein Display eines Automaten, um das Display vor mechanischen Einwirkungen zu schützen.

Bei Gewalteinwirkung, z.B. durch einen Faustschlag auf das Display, kann die Schutzschicht bersten, aber sie zerbricht nicht in tausende Teile. Dadurch ist das Verletzungsrisiko minimiert und das darunter liegende Display bleibt unbeschädigt. Es muss im Anschluss lediglich die Schutzschicht ausgetauscht werden, was mit einem wesentlich geringeren finanziellen Aufwand verbunden ist. Außerdem kann der Austausch problemlos vom Betreiber selbst vorgenommen werden, sodass der Automat schnell wieder genutzt werden kann.

Es ist dabei bevorzugt, dass die Schutzschicht aus mehreren Unterschichten aufgebaut ist. Besonders bevorzugt ist, dass die Schutzschicht aus mindestens drei Unterschichten besteht. Es ist vorteilhaft, wenn mindestens zwei Unterschichten aus Flachglas bestehen. Die Schutzschicht wird dadurch besonders robust und stoßsicherer als reine Plastik-Displayfolien, was für die Anwendung im Bereich der Spielautomaten wichtig ist. Denn anders als bei Smartphones dient der Schutz nicht dem Herunterfallen, sondern gezielter Gewalteinwirkung.

Bevorzugt handelt es sich bei mindestens einer der Unterschichten um eine Sicherheits-Laminierungsschicht. Es ist vorteilhaft, dass die Sicherheits-Laminierungsschicht zwischen zwei Flachglasschichten angeordnet ist. Die Sicherheits-Laminierungsschicht hält den Verbund zusammen und ist selbst reißfest und zähelastisch. Sie verbindet zwei oder mehr Flachglasscheiben bevorzugt zu dem speziellen Sicherheitsglas.

Besonders bevorzugt umfasst die Sicherheits-Laminierungsschicht Polyvinylbutyral (PVB) und/oder Ethylenvinylacetat (EVA).

Durch eine Walzenpresse kann z.B. ein Vorverbund von zwei oder mehr übereinander liegenden Glasschichten und der Sicherheits-Laminierungsschicht hergestellt werden. Unter einer Hitze von ca. 140 °C und einem ca. 12 bar starkem Druck, kann ein dauerhafter Verbund von Glas und Sicherheits-Laminierungsschicht erzielt werden. Dieser Schritt findet bevorzugt in einem Autoklav statt.

Der Vorteil der Verwendung von Glasschichten liegt darin, dass diese Schutzschichten nicht nur gegen Kratzer zu schützen, sondern auch die Kraft eines Stoßes gut verteilen. Dadurch sind Schutzschichten mit Glasschichten für den erfindungsgemäßen Zweck besonders gut geeignet.

Schutzschichten mit Glasschichten sind daher robuster und stoßsicherer als Plastikfolien oder sonstige synthetische Folien. Für die erfindungsgemäße Verwendung sind solche Schutzschichten daher ganz besonders geeignet.

Besonders bevorzugt sind Schutzschichten mit einem Härtegrad von 9H.

Die Schutzschicht weist bevorzugt eine Dicke zwischen 0,2 mm bis 5 mm auf, besonders bevorzugt zwischen 1 mm und 3 mm. Diese Stärken führen zu einer bevorzugten Festigkeit ohne dabei die Bedienbarkeit oder die optischen Eigenschaften des Displays zu beeinträchtigen. Die Druckempfindlichkeit wird nicht beeinträchtigt und bevorzugt sind keine Unterschiede zur Verwendung ohne Folie zu spüren.

Bevorzugt ist eine Lichtdurchlässigkeit von nahezu 100%. Bei einer Lichtdurchlässigkeit von über 90% kann die ursprüngliche Sichtqualität beibehalten werden.

Auch bevorzugt ist, dass die Schutzfolie resistent ist gegen Schmutz und Fingerabdrücke durch eine optionale ölabweisende Beschichtung. Dadurch sind die Displays nach Aufbringen einfach zu reinigen.

Die Schutzschicht weist bevorzugt eine Breite zwischen 35 cm bis 150 cm auf. Besonders bevorzugt sind Breiten von 45 cm bis 70 cm.

Die Schutzschicht weist bevorzugt eine Länge zwischen 20 cm bis 200 cm auf, besonders bevorzugt 25 cm bis 50 cm, ganz besonders bevorzugt ist eine Länge von 25 cm bis 45 cm.

Diese Maße sind besonders vorteilhaft, da sie einen optimalen Schutz bieten ohne dabei die Bedienbarkeit von Touchscreens oder die optischen Eigenschaften des Displays zu beeinflussen. Es ist von besonderer Wichtigkeit, dass die Touchscreens weiterhin funktionieren, ohne dass er zu Verzögerungen oder Verschiebungen kommt. Durch die Schutzschichten im Sinne der Erfindung wird dies gewährleistet. Es war überraschend, dass Schutzschichten in diesen großen Dimensionen bereitgestellt werden können, ohne die Funktionalität des Displays oder die optische Darstellung zu beeinflussen.

Es ist außerdem bevorzugt, dass die Schutzschicht zwei Trennfolien umfasst. Eine untere Trennfolie wird vor dem Aufbringen entfernt. Durch das Abziehen kann die Schutzschicht an dem Display haften. Eine zweite Trennfolie kann auf der gegenüberliegenden Seite der Schutzschicht angebracht sein und als Schmutz- und Kratzschutz vor der Verwendung dienen. Diese Folie kann nach dem korrekten Anbringen entfernt werden.

Es ist besonders vorteilhaft, dass die Schutzfolie optisch transparent und damit nahezu unsichtbar ist. Besonders bevorzugt handelt es sich um eine HD und/oder HD+ Displayschutzfolie. Dadurch ist es möglich, dass der HD Bildeindruck durch das Anbringen der Folie nicht gestört wird, womit die Schutzfolie besonders auch für die neue Generation von Automaten geeignet ist.

Durch die hohe Transparenz der erfindungsgemäßen Schutzfolie gibt es keine Einschränkungen der Helligkeit sowie Farbtreue des Displays. Es ist besonders bevorzugt, dass die Lichtdurchlässigkeit über 80%, ganz besonders bevorzugt über 90% liegt, was für ein kristallklares und gestochen scharfes Display sorgt.

Weiterhin bevorzugt ist, dass die Schutzfolie für gebogene Displays einsetzbar ist und somit einen gebogenen Bildschirmschutz darstellt. Besonders bevorzugt ist die Schutzfolie für gebogene Displays als HD und/oder HD+ Folie.

Es ist weiterhin bevorzugt, dass die Schutzfolie eine zusätzliche Silikon-Klebeschicht umfasst, durch welche eine einfache und blasenfreie Montage ermöglicht wird. Außerdem sorgt diese Schicht für eine perfekte Haftung und eine rückstandsfreie Entfernung.

Es ist besonders bevorzugt, dass die Schutzfolie der Erfindung passgenau verarbeitet ist und keine scharfen Kanten aufweist.

Durch die Schutzfolie der Erfindung gibt es keine Einschränkung bei der Bedienung und der Touchfunktion.

Durch den Antisplitterschutz ist das Verletzungsrisiko bei mutwilliger Beschädigung gering.

Die Schutzfolie der Erfindung ist einfach und blasenfrei auf das Display aufzubringen und kann ohne Rückstände wieder entfernt werden.

Die Schutzfolie der Erfindung kann vom Nutzer selbst angebracht werden. Wichtig beim Anbringen ist, dass auch die Umgebung möglichst staubfrei bleibt, da sich sonst Blasen bilden können.

Bevorzugt wird das Display beziehungsweise der Touchscreen vor dem Anbringen gereinigt, zum Beispiel mit Hilfe eines Putztuchs. Die Verwendung von Mikrofasertüchern ist dabei besonders geeignet. Es hat sich als vorteilhaft erwiesen, das Display anschließend mit einem Feuchttuch nochmals zu reinigen und mit dem Trockentuch abzutrocknen.

Wenn nötig können Kleinpartikel zusätzlich mit einem sogenannten Staub-Absorber entfernt werden. Zum Platzieren der Schutzschicht ist wichtig, dass diese korrekt ausgerichtet wird.

In einer weiteren bevorzugten Ausführungsform betrifft die Erfindung einen Automaten, bevorzugt Spielautomaten, umfassend ein Display, auf das eine Schutzschicht gemäß einem der vorhergehenden Darstellung aufgebracht ist.

Besonders bevorzugt ist, dass es sich bei dem Display um ein Touchscreen handelt.

Besonders bevorzugt ist die Anwendung bei den folgenden Geräten bzw. Spielautomaten:

### a) M-Box

In diesem Fall hat die Schutzschicht der Erfindung bevorzugt die Maße 67,5 cm x 41 cm.

### b) Bally Wulff Games and Entertainment Spielautomaten

In diesem Fall hat die Schutzschicht der Erfindung bevorzugt die Maße 67,5 cm x 40 cm.

### c) Gauselmann Spielautomaten

In diesem Fall hat die Schutzschicht der Erfindung bevorzugt die Maße 55 cm x 34,5 cm.

### d) Löwen Entertainment Spielautomaten

In diesem Fall hat die Schutzschicht der Erfindung bevorzugt die Maße 53 cm x 30,5 cm.

### f) Slant Top Magi

In diesem Fall hat die Schutzschicht der Erfindung bevorzugt die Maße 47 cm x 29,5 cm.
g) Admiral Spielautomaten
h) Wettautomaten Tipico
i) Bet3000

Der Fachmann weiß dabei, dass die Schutzschichten für die zuvor genannten Automatenmodelle auch leicht abweichende Maße aufweisen können. Die genannten Automaten stellen bevorzugte Ausführungsformen der Erfindung dar, ohne auf diese beschränkt zu sein. Neben Spielautomaten kann die erfindungsgemäße Schutzschicht auch auf Bankautomaten, Fahrkartenautomaten oder andere Geräte aufgebracht werden.

Es war dabei überraschend, dass die Schutzschicht der Erfindung in den großen Abmessungen bereits gestellt werden konnte, ohne dass dabei Einbußen in Bezug auf die Bedienbarkeit oder die Optik in Kauf genommen werden müssen.

Die anmeldungsgemäße Lehre zeichnet sich durch folgende Merkmale aus:
- neue Aufgabenstellung
- Vorliegen eines seit langem ungelösten dringenden Bedürfnisses für die Lösung des mit der Erfindung gelösten Problems
- die Einfachheit der Lösung spricht für erfinderische Tätigkeit, insbesondere da sie kompliziertere Lehren ersetzt
- Entwicklung der wissenschaftlichen Technik ging in eine andere Richtung
- wirtschaftlicher Erfolg.

Insbesondere die vorteilhaften Ausführungsformen der Erfindung weisen mindestens einen oder mehrere der genannten Vorteile auf.

## Patentansprüche

1. Schutzschicht zum Aufbringen auf ein Display eines Automaten, um das Display vor mechanischen Einwirkungen zu schützen, wobei die Schutzschicht aus mehreren Unterschichten aufgebaut ist und wobei mindestens zwei Unterschichten aus Flachglas bestehen und wobei die Schutzschicht im Wesentlichen die gleiche Größe wie das Display aufweist.

2. Schutzschicht nach Anspruch 1, wobei diese aus mindestens drei Unterschichten besteht.

3. Schutzschicht nach Anspruch 1 oder 2, wobei es sich bei mindestens einer der Unterschichten um eine Sicherheits-Laminierungsschicht handelt.

4. Schutzschicht nach dem vorhergehenden Anspruch, wobei die Sicherheits-Laminierungsschicht zwischen zwei Flachglasschichten angeordnet ist.

5. Schutzschicht nach Anspruch 3 oder 4, wobei die Sicherheits-Laminierungsschicht Polyvinylbutyral (PVB) und/oder Ethylenvinylacetat (EVA) umfasst.

6. Schutzschicht nach einem der vorhergehenden Ansprüche, wobei die Schutzschicht eine Dicke zwischen 1 mm bis 5 mm aufweist.

7. Schutzschicht nach einem der vorhergehenden Ansprüche, wobei die Schutzschicht eine Breite zwischen 35 cm bis 150 cm aufweist.

8. Schutzschicht nach einem der vorhergehenden Ansprüche, wobei die Schutzschicht eine Länge zwischen 20 cm bis 200 cm aufweist, besonders bevorzugt cm.

9. Schutzschicht nach einem der vorhergehenden Ansprüche, wobei es sich um eine HD-Folie oder HD+-Folie handelt.

10. Automat, bevorzugt Spielautomat, umfassend ein Display, auf das eine Schutzschicht gemäß einem der vorhergehenden Ansprüche aufgebracht ist.
